# DEMANDE DE BREVET EUROPEEN

(11) **EP 4 353 570 A1**
(43) Date de publication de la demande: **17.04.2024**
(21) Numéro de dépôt: 23200452.3
(22) Date de dépôt: 28.09.2023
(51) Int. Cl.: B62D 25/10, B62D 25/12

(54) **PLATINE DE FIXATION DE CHARNIERE DE CAPOT MOTEUR POUR VEHICULE AUTOMOBILE MULTIFONCTION**

(30) Priorité: 11.10.2022 FR 2210392
(71) Demandeur: Stellantis Auto SAS, 78300 Poissy (FR)
(72) Inventeur: GOURVENNEC, Thibault, 91210 Draveil (FR); BOUDAN, Julien, 91210 Draveil (FR); ROYER, Guillaume, 91680 Bruyères-le-Châtel (FR); PERON, Rodolphe, 95220 Herblay-sur-Seine (FR)

(57) **Abrégé**

L'invention propose un capot avant (18) de véhicule automobile. Le capot avant, ou capot moteur, comprend : un panneau extérieur (40) ; une doublure de rigidification (22) du panneau extérieur ; un dégagement (24) entre le panneau extérieur et la doublure de rigidification ; une platine de fixation (26) d'une charnière. La platine de fixation est disposée dans le dégagement et contre la doublure de rigidification afin de renforcer la zone d'ancrage de la charnière. Le capot avant comprend en outre des moyens élastiques (30), tel un cordon d'élastomère, entre la platine de fixation et le panneau extérieur afin de maintenir le panneau extérieur au niveau du dégagement. L'invention propose également un véhicule automobile.

## Description

L'invention a trait aux ouvrants d'un véhicule automobile. L'invention a également trait à la sécurité des ouvrants d'un véhicule automobile. L'invention concerne la fixation d'un capot avant à une liaison pivotante d'un véhicule automobile. En particulier, l'invention concerne un véhicule automobile avec une platine de fixation reliant une liaison pivotante à un capot avant de véhicule automobile.

Le compartiment moteur d'un véhicule automobile est accessible grâce à un volet pivotant communément appelé capot moteur ou encore capot avant. De manière à faciliter l'accès au moteur, le capot avant présente de grandes dimensions ; de l'ordre du mètre sur certains modèles. Afin de le relier de manière pivotante à la structure portante du véhicule, une liaison pivotante de type charnière est prévue de chaque côté. Chaque liaison pivotante est fixée au capot avant par l'intermédiaire d'un système de renfort, telle une platine de fixation. Le système de renfort contribue au réglage en position du capot avant.

En complément, un point de verrouillage est ajouté en position centrale avant. Ainsi, le capot est généralement maintenu en trois points distants. Malgré la présence d'une doublure sous sa peau extérieure, le capot avant reste un élément souple au regard de ses dimensions. Ceci répond à des contraintes de masse embarquée, mais également à des contraintes de sécurité en cas de choc piéton sur l'avant du véhicule automobile.

Le document IN-A-202011008762 présente un véhicule automobile avec un capot avant monté de manière pivotante grâce à des charnières latérales. Le capot avant présente une peau supérieure et une ossature inférieure sous la peau. Au niveau des branches supérieures des charnières, le capot comprend un renfort sur l'ossature inférieure ; lui-même surmonté d'un patch. Le renfort comprend un renfoncement s'étendant vers le bas. Le patch comprend une portion centrale soudée au renfoncement du renfort. Cette configuration permet d'optimiser la robustesse d'ancrage de la charnière.

Or en conditions de circulation, le capot avant est sollicité en vibration. Les oscillations du capot s'accentuent lorsque le véhicule automobile considéré suit un autre véhicule qui génère des tourbillons d'écoulement d'air. Suivant les configurations, le capot est sollicité selon une fréquence propre et vibre. Il rentre alors en vibration selon un mode propre, phénomène que perçoivent les utilisateurs du véhicule en raison du bruit généré. Ces vibrations sont notamment visibles à l'aplomb des charnières. Cet aspect nuit à la qualité perçue du véhicule en plus de dégrader physiquement certains éléments.

En outre, le capot avant est exposé aux collisions avec des piétons. Il doit être conçu de sorte à répondre à des normes spécifiques qui incluent le scénario d'un choc avec la tête d'un piéton.

L'invention a pour objectif de répondre à au moins un des problèmes ou inconvénients rencontrés dans l'art antérieur. En particulier, l'invention a pour objectif de réduire les vibrations d'un capot avant de véhicule automobile. L'invention a également pour objectif d'optimiser le niveau de sécurité en choc piéton, la géométrie du véhicule, et la réduction des vibrations d'un capot avant de véhicule automobile.

A cet effet et selon un premier aspect, l'invention propose un capot avant de véhicule automobile, ledit capot avant comprenant : un panneau extérieur ; une doublure de rigidification du panneau extérieur ; un dégagement entre le panneau extérieur et la doublure de rigidification ; une platine de fixation de charnière, ladite platine de fixation étant disposée dans le dégagement et contre la doublure de rigidification ; remarquable en ce que le capot avant comprend des moyens élastiques entre la platine de fixation et le panneau extérieur afin de maintenir le panneau extérieur via les moyens élastiques au niveau du dégagement.

L'invention ajoute une entité faisant ressort sous le panneau extérieur, ce qui permet d'en gommer les vibrations. Ainsi, la qualité perçue est améliorée.

On aura bien compris que l'invention propose un appui intermédiaire élastique pour le panneau extérieur, et s'étendant depuis la doublure de rigidification.

Préférentiellement, la platine de fixation comprend une protrusion centrale qui fait saillie vers le panneau extérieur depuis la doublure de rigidification, les moyens élastiques étant contre la protrusion centrale ; préférentiellement la protrusion centrale comprend une surface d'extrémité à distance de la doublure de rigidification.

Préférentiellement, la platine de fixation comprend une première aile de fixation et une deuxième aile de fixation contre la doublure de rigidification, la protrusion centrale reliant la première aile de fixation à la deuxième aile de fixation.

Préférentiellement, le dégagement comprend un sous espace entre la doublure de rigidification et la protrusion centrale, préférentiellement la protrusion centrale comprend une première jambe de liaison reliée à la première aile de fixation et une deuxième jambe de liaison reliée à la deuxième aile de fixation.

Préférentiellement, la platine de fixation comprend une découpe d'affaiblissement entre les moyens élastiques et la doublure de rigidification.

Préférentiellement, les moyens élastiques présentent une précontrainte mécanique de compression entre la platine de fixation et le panneau extérieur.

Préférentiellement, le capot avant comprend une direction transversale, et les moyens élastiques comprennent un cordon avec un allongement principal agencé selon la direction transversale.

Préférentiellement, le dégagement comprend une première moitié du côté du panneau extérieur, et une deuxième moitié du côté de la doublure de rigidification, les moyens élastiques étant disposés dans la première moitié, préférentiellement les moyens élastiques sont totalement logés dans la première moitié.

Préférentiellement, les moyens élastiques comprennent un matériau élastomère.

Préférentiellement, le panneau extérieur comprend un premier matériau, et les moyens élastiques comprennent un deuxième matériau différent du premier matériau.

Préférentiellement, le premier matériau comprend un premier coefficient de viscoélasticité, et le deuxième matériau comprend un deuxième coefficient de viscoélasticité supérieur au premier coefficient de viscoélasticité.

Préférentiellement, l'ouvrant comprend une zone de fixation attenante au dégagement.

Préférentiellement, la zone de fixation est séparée du dégagement par la doublure de rigidification.

Préférentiellement, la découpe d'affaiblissement s'étend sur la protrusion et/ou la première aile de fixation.

Préférentiellement, la protrusion centrale comprend une surface d'extrémité en regard du panneau extérieur et/ou parallèle au panneau extérieur et/ou à distance de la doublure de rigidification.

Préférentiellement, les moyens élastiques sont contre la surface d'extrémité de la protrusion centrale.

Préférentiellement, la découpe se prolonge sur la surface d'extrémité.

Selon un autre aspect, l'invention propose un capot avant de véhicule automobile, ledit capot avant comprenant un panneau extérieur ; une doublure de rigidification du panneau extérieur ; un dégagement entre le panneau extérieur et la doublure de rigidification ; une platine de fixation de charnière, ladite platine de fixation étant disposée dans le dégagement et contre la doublure de rigidification ; remarquable en ce que la platine de fixation comprend une protrusion centrale qui fait saillie vers le panneau extérieur depuis la doublure de rigidification, et la platine de fixation comprend une découpe d'affaiblissement formée sur la protrusion.

Selon un autre aspect, l'invention propose un capot avant de véhicule automobile, ledit capot avant comprenant un panneau extérieur ; une doublure de rigidification du panneau extérieur ; un dégagement entre le panneau extérieur et la doublure de rigidification ; une platine de fixation de charnière, ladite platine de fixation étant disposée dans le dégagement et contre la doublure de rigidification ; remarquable en ce que le capot avant comprend un système amortisseur présentant une protrusion centrale formée par la platine de fixation et faisant saillie vers le panneau extérieur depuis la doublure de rigidification, et ladite protrusion centrale comprenant en outre des moyens élastiques ; le système amortisseur s'étendant au travers du dégagement et/ou du panneau extérieur à la doublure de rigidification.

Selon un autre aspect, l'invention propose un véhicule automobile comprenant : une structure principale, un habitacle, un compartiment avant qui est en avant de l'habitacle, un capot avant fermant le compartiment avant, une charnière reliant de manière pivotante le capot avant à la structure principale ; remarquable en ce que le capot avant est conforme à l'invention, préférentiellement la charnière comprend une longueur longitudinale, le dégagement s'étendant sur toute la longueur longitudinale de la charnière et/ou les moyens élastiques sont longitudinalement au niveau de la charnière.

Selon un autre aspect, l'invention propose un ouvrant de véhicule automobile comprenant une structure principale, ledit ouvrant comprenant : un panneau extérieur ; une doublure de rigidification du panneau extérieur ; un dégagement entre le panneau extérieur et la doublure de rigidification ; une platine de fixation d'une liaison pivotante destinée à être fixée à la structure principale du véhicule, ladite platine de fixation étant disposée dans le dégagement et contre la doublure de rigidification ; remarquable en ce que l'ouvrant comprend des moyens élastiques entre la platine de fixation et le panneau extérieur afin de maintenir le panneau extérieur au niveau du dégagement.

Les caractéristiques préférentielles décrites en relation avec l'un des aspects de l'invention s'appliquent également aux autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 est un éclaté d'un capot avant de véhicule automobile selon l'invention.
La figure 3 est une coupe d'un capot avant de véhicule automobile selon l'invention.
La figure 4 montre une vue isométrique d'une platine de fixation de capot avant de véhicule automobile selon l'invention.

Dans la description qui suit, le terme « comprendre » est synonyme de « inclure » et n'est pas limitatif en ce qu'il autorise la présence d'autres éléments dans le véhicule automobile ou le capot avant auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale. Ces trois axes définissent un trièdre dont l'orientation est conservée au travers des figures.

Dans la présente description, les plages de valeurs comprennent les bornes qui les délimitent.

Au travers de la description, les différentes figures utilisent les mêmes signes de référence pour désigner des entités identiques ou similaires.

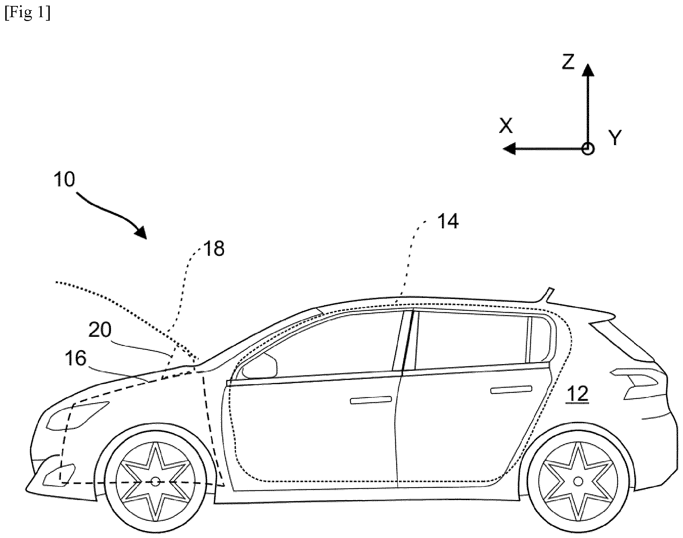

La figure 1 représente un véhicule automobile 10 selon l'invention. Le véhicule automobile 10 comprend des moyens de stockage d'énergie et au moins un moteur (non représenté) adaptés pour entraîner ledit véhicule automobile 10.

Le véhicule automobile 10 comprend une structure principale 12. La structure principale 12 forme la caisse du véhicule. Les éléments mobiles y sont attachés. La structure principale 12 s'étend sensiblement sur toute la longueur et la largeur du véhicule 10. Elle peut comprendre des portions de carrosserie tel que le toit. La structure principale 12 comprend un assemblage de tôles embouties et fixées les unes aux autres, par exemple par soudure. Alternativement, la structure portante est un assemblage de profilés reliés les uns-aux autres.

La structure principale 12 délimite plusieurs compartiments du véhicule automobile 10, dont l'habitacle 14 destiné à accueillir les passagers (non représentés), et un compartiment avant 16. La structure principale 12 loge optionnellement un compartiment arrière telle coffre arrière. Le compartiment avant 16 peut être un compartiment moteur ou un compartiment de chargement. Il est agencé en avant de l'habitacle 14.

Le véhicule automobile 10 comprend plusieurs ouvrants, dont un capot avant 18 ; ouvrant et fermant le compartiment avant 16. Le véhicule automobile 10 présente également des portes latérales donnant accès à l'habitacle 14. Le capot avant 18 est séparé et distinct des portes latérales. Il présente un axe de pivotement horizontal, notamment transversal. Le véhicule automobile 10 comprend au moins une liaison mécanique reliant le capot avant 18 à la structure principale 12, par exemple de type charnière. En l'occurrence, le véhicule automobile 10 comprend deux charnières 20, qui sont respectivement agencées à gauche et à droite du capot avant 18.

Le capot avant 18 est monté mobile entre une position ouverte, représentée en pointillés ; et une position fermée. Le capot avant 18 obture une ouverture de contour complémentaire. Le capot avant 18 pivote généralement par rapport à la structure principale 12. Il bascule d'une position à l'autre en changeant son inclinaison. Dans l'exemple de réalisation de l'invention, l'ouvrant est un capot avant ; par exemple un capot moteur.

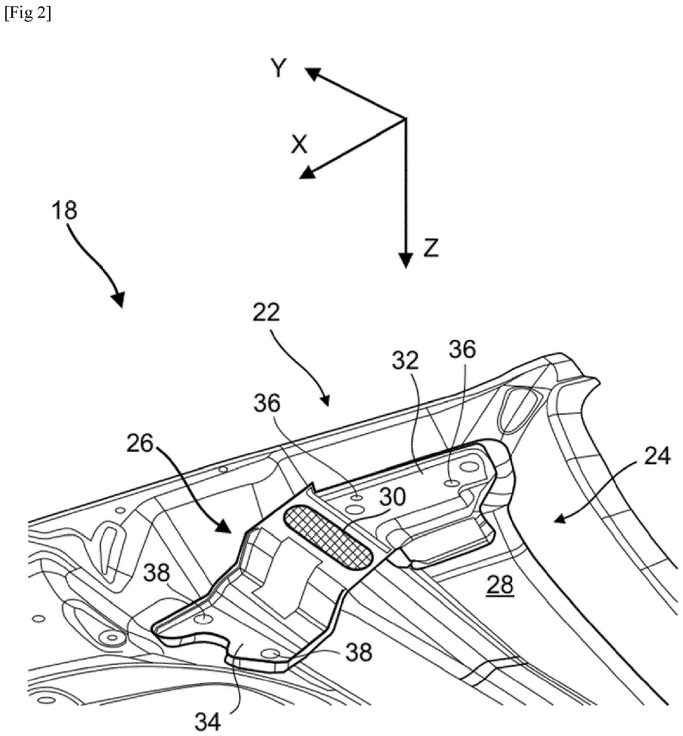

La figure 2 présente une portion de capot avant 18 de véhicule automobile. Le véhicule automobile peut correspondre à celui présenté en relation avec la figure 1. La figure 2 est un agrandissement du capot avant 18 au niveau de son coin arrière de droite. Le panneau extérieur n'est pas représenté par soucis de clarté. Bien qu'un seul côté ne soit décrit, le présent enseignement s'applique également au côté gauche.

Le capot avant 18 positionne un panneau extérieur (représenté) au-dessus de la doublure de rigidification 22 du panneau extérieur. La doublure de rigidification 22 forme une ossature interne, ou encore un renfort de maintien du panneau extérieur. Il s'étend sur toute l'étendue du panneau extérieur afin de maintenir ce dernier sur toute sa surface. La doublure de rigidification 22 présente une épaisseur supérieure à l'épaisseur du panneau extérieur. Il présente des ajours et des profilés délimitant les ajours. Il comporte des nervures de rigidification tandis que le panneau extérieur est généralement lisse pour des raisons d'aérodynamisme.

Le capot avant 18 présente également un dégagement 24 entre le panneau extérieur et la doublure de rigidification 22. Le dégagement 24 forme un évidement. Il forme un espace libre au-dessus de la doublure de rigidification 22 et sous le panneau extérieur.

Le capot avant 18 est équipé d'une platine de fixation 26 pour y ancrer la charnière (non représentée) sous la doublure de rigidification 22. La platine de fixation 26 est disposée dans le dégagement 24 et contre une surface supérieure 28 de la doublure de rigidification 22.

Le capot avant 18 comprend des moyens élastiques 30. Les moyens élastiques 30 sont disposés au-dessus de la platine de fixation 26. Les moyens élastiques 30 sont intercalés entre la platine de fixation 26 et le panneau extérieur afin de le maintenir au niveau du dégagement 24, par exemple au milieu du dégagement. Les moyens élastiques 30 apportent un point d'appui souple pour le panneau extérieur. Cela atténue les vibrations de ce dernier. La souplesse des moyens élastiques 30 évite les déformations du panneau extérieur.

La platine de fixation 26 peut être un élément de renfort, en ce sens qu'elle renforce localement la doublure de rigidification 22 à l'endroit du contact avec la charnière. La platine de fixation 26 comporte généralement une forme allongée suivant la direction longitudinale. Elle comprend une première aile de fixation 32 et une deuxième aile de fixation 34 épousant la surface supérieure 28 de la doublure de rigidification 22. La première aile de fixation 32 et la deuxième aile de fixation 34 sont longitudinalement opposées.

La première aile de fixation 32 peut comprendre des moyens de fixation de la charnière, tels des orifices filetés 36. La platine de fixation 26 est fixée à la doublure de rigidification 22 à l'aide de points de fixation 38. Les points de fixation 38 sont répartis sur la première aile de fixation 32 et la deuxième aile de fixation 34. Ils peuvent comprendre de points de soudure, ou des fixations par clinchage.

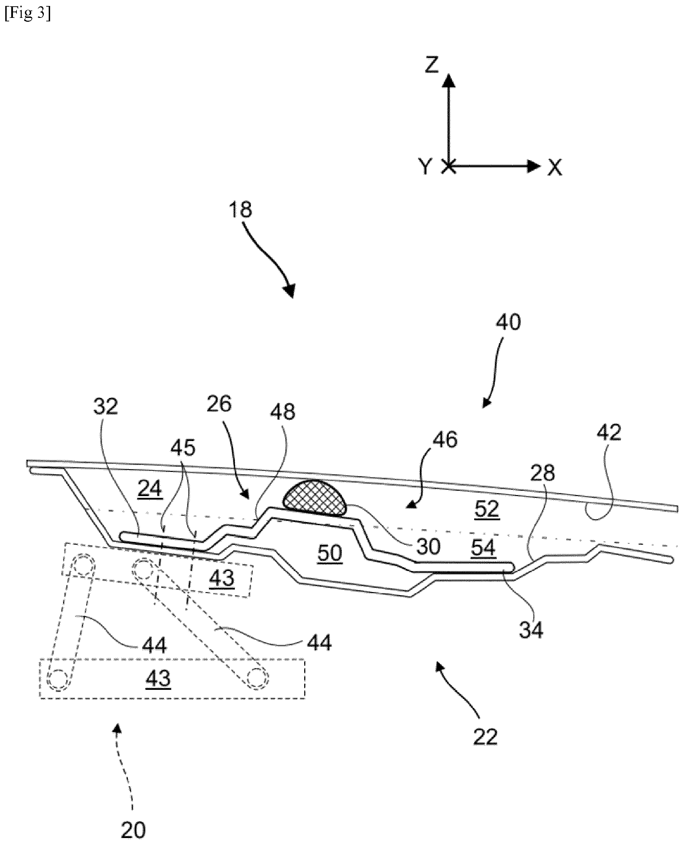

La figure 3 présente une coupe longitudinale d'un capot avant 18 de véhicule automobile. Le véhicule automobile peut correspondre à celui présenté en relation avec l'une des figures 1 à 2.

Le capot avant est habillé par le panneau extérieur 40. Le panneau extérieur 40 forme l'enveloppe extérieure du capot avant 18. Il forme la peau extérieure du capot avant 18. Il forme la surface visible depuis l'extérieur. Le panneau extérieur 40 peut être formé d'une tôle emboutie dont l'épaisseur est comprise entre 0.5 mm et 0.8 mm. Son épaisseur peut être égale de 0.65 mm. Elle peut être en acier ou en alliage d'aluminium. Cette plage d'épaisseurs permet d'alléger le capot avant 18, et d'offrir une certaine souplesse dans l'éventualité d'un choc piéton, et en particulier d'un choc contre la tête d'un piéton.

La doublure de rigidification 22 supporte le panneau extérieur 40 qui la masque. La platine de fixation 26 est logée dans le dégagement 24. La surface supérieure 28 de la doublure de rigidification 22 et la surface inférieure 42 du panneau extérieur 40 délimitent le dégagement 24. La surface inférieure 42 est une surface interne, tournée vers la surface supérieure 28. La surface supérieure 28 forme une surface externe, en ce sens qu'elle est tournée vers l'extérieur du véhicule automobile. Le dégagement forme une zone de souplesse du capot avant 18. Dans l'éventualité d'un choc d'une tête de piéton au droit de la charnière 20, le panneau extérieur 40 est apte à s'enfoncer afin de réduire la décélération subie par la tête du piéton.

La platine de fixation 26 est logée dans le dégagement 24. Elle est portée par la doublure de rigidification 22, et reste à distance du panneau extérieur 40. La platine de fixation 26 est séparée du panneau extérieur 40 par les moyens élastiques 30. La première aile de fixation 32 et la deuxième aile de fixation 34 reposent sur la doublure de rigidification 22. Elles sont séparées du panneau extérieur 40 par le dégagement 24. Les moyens élastiques 30 sont directement en contact de la surface inférieure 42, ou par l'intermédiaire d'un élément intercalé assurant le maintien du panneau extérieur 40 par les moyens élastiques 30.

En position fermée du capot avant 18, le dégagement 24 s'étend longitudinalement sur au moins la moitié, préférentiellement toute la longueur de la charnière 20. La charnière 20 peut être une charnière à une liaison mécanique pivotante. La charnière 20 peut être un système de charnière.

Alternativement la charnière comprend plusieurs biellettes pivotantes 44 dont les extrémités sont reliées à des embases via des liaisons mécaniques pivotantes. Le dégagement 24 et/ou la platine de fixation 26 chevauchent longitudinalement au moins l'une des biellettes pivotantes 44.

Des axes de fixation 45, telles des vis, fixent une des embases 43 à la platine de fixation 26 au travers de la doublure de rigidification 22. La doublure de rigidification 22 forme une séparation entre l'embases 43 du dessus et la platine de fixation 26. La platine de fixation 26 forme un renfort, dans une zone de fixation, pour lier le capot avant 18 à la charnière 20. Il offre un matériau plus résistant et/ou plus épais que la doublure de rigidification 22.

L'ensemble de la platine de fixation 26 et des moyens élastiques 30 forment un système amortisseur 46, ou encore un point d'appui auxiliaire élastique. Le système amortisseur 46 peut être un système de support élastique ou souple. Le système amortisseur 46 forme un lien souple, ou encore une entretoise amortissante. La platine de fixation 26 forme une réhausse rapprochant les moyens élastiques 30 du panneau extérieur 40. Cela permet de réduire le volume et donc la masse des moyens élastiques 30.

Le support assuré par les moyens élastiques 30 limite l'amplitude des éventuelles oscillations du panneau extérieur 40 au niveau du dégagement 24, lorsque le panneau extérieur 40 est sollicité en vibrations par un écoulement ou des vibrations mécaniques générées par le véhicule automobile. Ainsi, les phénomènes de vibrations sont moins ou ne sont plus perçus par les utilisateurs du véhicule automobile.

Par ailleurs, la présence des moyens élastiques permet un meilleur contrôle en début d'impact contre la tête d'un piéton sujet à une collision avec le véhicule. Ainsi l'invention améliore la sécurité en parallèle d'une amélioration de la qualité perçue.

Les moyens élastiques 30 comprennent un matériau élastomère. Par exemple, les moyens élastiques 30 comprennent un cordon de matériau élastomère. Les moyens élastiques 30 peuvent comprendre du silicone. Selon une alternative de l'invention, les moyens élastiques 30 comprennent de la mousse.

La platine de fixation 26 comprend une protrusion centrale 48. La protrusion centrale 48 fait saillie vers le haut. La protrusion centrale 48 s'étend depuis la doublure de rigidification 22 vers le panneau extérieur 40. Les moyens élastiques sont au sommet de la protrusion centrale 48. Ils sont sur la protrusion centrale 48. Le dégagement 24 comprend un sous espace 50 entre la doublure de rigidification 22 et la protrusion centrale 48.

Les moyens élastiques 30 présentent optionnellement une précontrainte mécanique de compression entre la platine de fixation 26 et le panneau extérieur 40. Les moyens élastiques 30 peuvent être sensiblement comprimés verticalement dans le dégagement 24 ; entre la surface supérieure 28 et la surface inférieure 42.

Le dégagement 24 peut être subdivisé verticalement, ou plus généralement selon l'épaisseur du panneau extérieur 40 ; en une première moitié 52 du côté du panneau extérieur 40, et une deuxième moitié 54 du côté de la doublure de rigidification 22. Les moyens élastiques 30 sont intégrés dans la première moitié 52. Ils sont préférentiellement totalement logés dans la première moitié 52. Les moyens élastiques 30 sont séparés et distants de la deuxième moitié 54. Ainsi, ils sont rapprochés du panneau extérieur 40. Leur efficacité pour supprimer ou réduire les vibrations du panneau extérieur 40 est optimale.

Le panneau extérieur 40 comprend un premier matériau, et les moyens élastiques 30 comprennent un deuxième matériau différent du premier matériau. Le premier matériau comprend un premier coefficient de viscoélasticité, et le deuxième matériau comprend un deuxième coefficient de viscoélasticité supérieur au premier coefficient de viscoélasticité, préférentiellement au moins dix fois supérieur au premier coefficient de viscoélasticité. Ainsi, les moyens élastiques 30 dissipent efficacement l'énergie des vibrations. La doublure de rigidification 22 comprend un troisième matériau différent du deuxième matériau. Le troisième matériau comprend un troisième coefficient de viscoélasticité inférieur au deuxième coefficient de viscoélasticité.

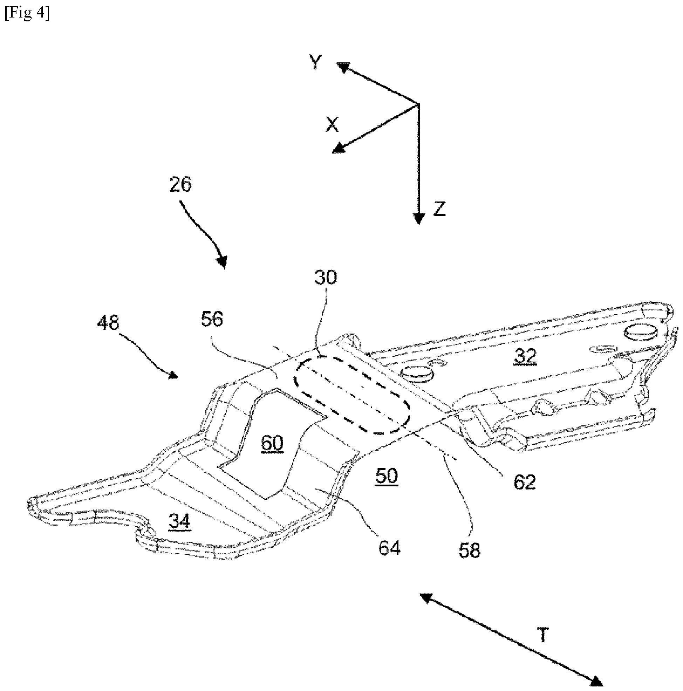

La figure 4 présente une vue en perspective de la platine de fixation 26 pour véhicule automobile. Le véhicule automobile peut correspondre à celui présenté en relation avec l'une des figures 1 à 3. La doublure de rigidification et le panneau extérieur ne sont pas représentés par soucis de clarté.

La protrusion centrale 48 s'élève depuis la première aile de fixation 32 et la deuxième aile de fixation 34. La protrusion centrale 48 forme un pont enjambant le sous espace 50, et reliant la première aile de fixation 32 à la deuxième aile de fixation 34.

En cas de collision, le sous espace 50 se comprime lors de l'écrasement de la protrusion centrale 48. Cette déformation s'accompagne d'une absorption et de dissipation d'énergie afin d'amortir une énergie de choc. La protrusion centrale 48 complète l'effet d'amorti offert par les moyens élastiques 30 en cas de collision.

La protrusion centrale 48 fait saillie vers le panneau extérieur (non représenté) depuis la doublure de rigidification (non représentée). Les moyens élastiques 30 prolongent la protrusion centrale 48. La protrusion centrale 48 comprend une surface d'extrémité 56 à distance de la doublure de rigidification. La surface d'extrémité 56 forme une surface de sommet tournée vers le panneau extérieur. La surface d'extrémité 56 est une face distale, à l'opposé de la doublure de rigidification. Elle est à l'opposé de la première aile de fixation 32 et de la deuxième aile de fixation 34, notamment verticalement.

La surface d'extrémité 56 est en regard du panneau extérieur. Elle peut être parallèle au panneau extérieur et à distance de la doublure de rigidification. Les moyens élastiques 30 sont contre la surface d'extrémité 56 ; par exemple précontraints en compression contre la surface d'extrémité 56.

Le capot avant comprend une direction transversale T, et les moyens élastiques 30 comprennent un cordon avec un allongement principal 58 agencé selon la direction transversale T. L'allongement principal 58 des moyens élastiques 30 permet une meilleure répartition des efforts à l'endroit du contact avec le panneau extérieur. Cela limite les éventuelles déformations le long de la ligne de contact. La qualité perçue est préservée. L'agencement de l'allongement principal 58 selon la direction transversale T permet également de bloquer les vibrations selon certains modes propres du panneau extérieur.

La direction transversale T et l'allongement principal 58 sont parallèle, ou au plus inclinés l'un par rapport à l'autre d'un angle d'au plus 20°, préférentiellement d'au plus 10°.

La platine de fixation 26 comprend une découpe d'affaiblissement 60 entre les moyens élastiques 30 et la doublure de rigidification. La découpe d'affaiblissement 60 peut être un ajour ou une fente. La découpe d'affaiblissement 60 peut former une zone fusible, configurée pour se déformer en cas de choc prédéfini. Elle peut présenter une forme rectangulaire. Elle peut s'étendre depuis la première aile de fixation 32. La découpe d'affaiblissement 60 peut s'étendre sur toute la hauteur de la platine de fixation 26. Elle forme un passage communiquant avec le sous espace 50. En cas de collision avec une tête, la découpe d'affaiblissement 60 favorise l'écrasement de la protrusion centrale 48 ; ce qui réduit la rigidité de la platine de fixation 26 et limite les éventuelles blessures.

La protrusion centrale 48 présente une forme en lettre « U » inversée. La protrusion centrale 48 comprend une première jambe de liaison 62 reliée à la première aile de fixation 32, et une deuxième jambe de liaison 64 reliée à la deuxième aile de fixation 34. La première jambe de liaison 62 et la deuxième jambe de liaison 64 s'étendent depuis la surface d'extrémité 56, vers l'opposé des moyens élastiques 30. La première jambe de liaison 62 et la deuxième jambe de liaison 64 sont inclinées par rapport à la première aile de fixation 32 et à la deuxième aile de fixation 34 respectivement. Elles peuvent être sensiblement perpendiculaires à la doublure de rigidification, ou au moins inclinées d'au moins 60° par rapport à la doublure de rigidification.

La découpe d'affaiblissement 60 s'étend dans la deuxième aile de fixation 34, traverse la deuxième jambe de liaison 64, et se prolonge sur la surface d'extrémité 56. Cette géométrie permet de limiter la rigidité de la deuxième jambe de liaison 64, et d'en programmer la déformation en cas d'un choc spécifique.

Selon une option de l'invention, la première jambe de liaison 62 est également traversée par une découpe d'affaiblissement similaire (non représentée).

Optionnellement, l'enseignement détaillé en relation le capot avant s'applique généralement à tout ouvrant du véhicule automobile, et par exemple à une porte latérale.

## Revendications

1. Capot avant (18) de véhicule automobile (10), ledit capot avant (18) comprenant : un panneau extérieur (40) ; une doublure de rigidification (22) du panneau extérieur (40); un dégagement (24) entre le panneau extérieur (40) et la doublure de rigidification (22) ; une platine de fixation (26) de charnière (20), ladite platine de fixation (26) étant disposée dans le dégagement (24) et contre la doublure de rigidification (22) ; **caractérisé en ce que** le capot avant (18) comprend des moyens élastiques (30) entre la platine de fixation (26) et le panneau extérieur (40) afin de maintenir le panneau extérieur (40) via les moyens élastiques (30) au niveau du dégagement (24).

2. Capot avant (18) selon la revendication 1, **caractérisé en ce que** la platine de fixation (26) comprend une protrusion centrale (48) qui fait saillie vers le panneau extérieur (40) depuis la doublure de rigidification (22), les moyens élastiques (30) étant contre la protrusion centrale (48) ; préférentiellement la protrusion centrale (48) comprend une surface d'extrémité (56) à distance de la doublure de rigidification (22).

3. Capot avant (18) selon la revendication 2, **caractérisé en ce que** la platine de fixation (26) comprend une première aile de fixation (32) et une deuxième aile de fixation (34) contre la doublure de rigidification (22), la protrusion centrale (48) reliant la première aile (32) de fixation à la deuxième aile de fixation (34).

4. Capot avant (18) selon la revendication 3, **caractérisé en ce que** le dégagement (24) comprend un sous espace (50) entre la doublure de rigidification (22) et la protrusion centrale (48), préférentiellement la protrusion centrale (48) comprend une première jambe de liaison (62) reliée à la première aile de fixation (32) et une deuxième jambe de liaison (64) reliée à la deuxième aile de fixation (34).

5. Capot avant (18) selon l'une des revendications 1 à 4, **caractérisé en ce que** la platine de fixation (26) comprend une découpe d'affaiblissement (60) entre les moyens élastiques (30) et la doublure de rigidification (22).

6. Capot avant (18) selon l'une des revendications 1 à 5, **caractérisé en ce que** les moyens élastiques (30) présentent une précontrainte mécanique de compression entre la platine de fixation (26) et le panneau extérieur (40).

7. Capot avant (18) selon l'une des revendications 1 à 6, **caractérisé en ce que** le capot avant (18) comprend une direction transversale (T), et les moyens élastiques (30) comprennent un cordon avec un allongement principal (58) agencé selon la direction transversale (T).

8. Capot avant (18) selon l'une des revendications 1 à 7, **caractérisé en ce que** le dégagement (24) comprend une première moitié (52) du côté du panneau extérieur (40), et une deuxième moitié (54) du côté de la doublure de rigidification (22), les moyens élastiques (30) étant disposés dans la première moitié (52), préférentiellement les moyens élastiques (30) sont totalement logés dans la première moitié (52).

9. Capot avant (18) selon l'une des revendications 1 à 8, **caractérisé en ce que** les moyens élastiques (30) comprennent un matériau élastomère.

10. Véhicule automobile (10) comprenant : une structure principale (12), un habitacle (14), un compartiment avant (16) qui est en avant de l'habitacle (12), un capot avant (18) fermant le compartiment avant (16), une charnière (20) reliant de manière pivotante le capot avant (18) à la structure principale (12) ; **caractérisé en ce que** le capot avant (18) est conforme à l'une des revendications 1 à 9, préférentiellement la charnière (20) comprend une longueur longitudinale, le dégagement (24) s'étendant sur toute la longueur longitudinale de la charnière (20) et/ou les moyens élastiques (30) sont longitudinalement au niveau de la charnière (20).
